# EUROPEAN PATENT APPLICATION

(11) **EP 2 119 591 A1**
(43) Date of publication of application: **18.11.2009**
(21) Application number: 08156085.6
(22) Date of filing: 13.05.2008
(51) Int. Cl.: B60P 1/00

(54) **Fall arrest system**

(71) Applicant: Corus UK Limited, London SW1P 4WY (GB)
(72) Inventor: Hill, William Martin, Northants NN 18 8 LR (GB); Kane, James Peter, Northants NN17 2JS (GB); Annand, Patrick John, Northants NN18 8NW (GB)
(74) Representative: Blauw, Frans Gerard

(57) **Abstract**

The invention relates to a fall arrest assembly (2,3) for use with a vehicle (8) having a platform or a floor elevated from the ground such as to present a fall hazard, said fall arrest assembly (2,3) comprising a frame structure (4) and at least one guard member (7), wherein connecting means are provided connecting the at least one guard member (7) to the frame structure (4), the connecting means allowing to move the guard member (7) or guard members between retracted and extended positions, wherein the guard members in extended position are positioned directly adjacent or against the vehicle (8).

## Description

The present invention relates to a fall arrest system, and in particular to a fall arrest system suitable for specific application in circumstances where there is a risk of a person falling from a platform of a relatively low height which is, nevertheless, sufficiently great to present a risk of injury.

Such a platform may be a platform used for loading or unloading of goods e.g. the bed or body of a vehicle, such as a lorry or a flatbed trailer.

In recent years a number of accidents have occurred when workers have been engaged in tasks on such locations. The platform or bed of a flatbed lorry is a particularly dangerous environment since it is elevated from the ground by 1.2 - 1.8 metres and in some cases even more.

Frequently, a worker is required to undertake tasks whilst standing on the bed or on the load on the bed of the lorry, trailer or the like, to engage elements of the load and/or to steady the load as the crane lifts and transfers it, and/or apply sheeting or a tarpaulin on the load. If, in undertaking these tasks, the worker's attention is focused on the work rather than on the precise boundaries of the flat-bed of the vehicle, it can happen that he may lose his footing and fall from the edge of the bed or platform. Although this fall may be less than two metres, the consequences of such a fall may be serious, involving strained or sprained joints, broken limbs, concussions and so forth.

Different devices to arrest a fall from a platform or vehicle are known in the art. For instance the use of polystyrene filled bags is known, which bags are positioned around the vehicle or platform on which the work is carried out. To be effective such polystyrene filled bags need to have certain minimal dimensions, resulting in large and difficult to handle elements. Although these elements are not fixed elements and can be moved, in practice this will not be done easily. Moreover, by their volume these polystyrene filled bags take up a lot of space on the shop floor, vehicle parking lot or other place where these polystyrene filled bags are used.

Instead of polystyrene filled bags it is also known to use airbags to arrest a fall from a platform or vehicle. Such airbags have about the same dimensions as the polystyrene filled bags, but can be moved more easily when deflated. The disadvantage is that it takes considerable time to inflate and deflate such air bags.

However, the greatest disadvantage of these polystyrene filled bags and air bags is that a fall is only arrested after a person has already fallen over quite a distance with the risk of already being hurt by hitting the edge of a platform or bed of a truck or trailer or any other protruding object.

Another known system especially for flatbed trailers provides fence sections that each have to be clamped individually to the edge of the trailer. In comparison with the bag system mentioned above this is a safer system. However, since a large number of these fence section are necessary to cover all sides of a trailer it is very time consuming to clamp all fence section to the trailer edge and to remove these fence sections again later on.

It is an object of the invention to provide a fall arrest assembly which is easy to handle and which can be positioned correctly with respect of a vehicle within a short time.

It is another object of the invention to provide a fall arrest assembly that gives good protection.

It is another object of the invention to provide a fall arrest assembly that can be secured in position.

It is another object of the invention to provide a fall arrest system with guiding means to position a vehicle with respect to the fall arrest system.

According to a first aspect of the invention one or more of these objects are realized by providing a fall arrest assembly for use with a vehicle having a platform or a floor elevated from the ground such as to present a fall hazard, said fall arrest assembly comprising a frame structure and at least one guard member, wherein connecting means are provided connecting the at least one guard member to the frame structure, the connecting means allowing to move the at least one guard member between retracted and extended positions.

With the fall arrest assembly according to the invention the guard member, which has to provide protection for people working on the vehicle, can easily be moved from a retracted position to an extended position, in which position the guard member comes to rest against a vehicle, for instance a flatbed trailer. This has the advantage that it is not necessary to position the vehicle directly adjacent a guard member and that, because these guard members are moveable between retracted and extended positions, the guard members can be brought into the right position within a very short time.

It will be clear that instead of a single guard member also two or more guard members can be used. Throughout the description the terms guard member and guard members are used and these respective terms will also have the meaning of multiple members or a single member where appropriate.

According to a further aspect of the invention the connecting means comprise one or more arms hinged to at least the frame structure. In the most simple embodiment with only one arm per guard member and with only a hinged joint of the arm to the support frame the movement of the guard member is restricted to a part of a circular path. Therefore, according to a preferred embodiment a connecting arm is hinged at both ends giving far greater flexibility in positioning a guard member. The hinge axis of such hinge joints are preferably both in the same direction and preferably both vertical.

According to a further embodiment two or more hinged arms are arranged in a parallelogram construction between frame structure and guard member. Such a construction is preferred for larger guard members for instance guard members with a length that corresponds to the length of flatbed trailers. With such a parallelogram construction the guard member can be controlled easier when moved from a retracted to an extended position. Preferably the parallelogram construction is in a horizontal plane with the arms hinged about vertical axis.

In another embodiment a parallelogram construction is used in a vertical plane instead of a horizontal plane. Preferably this is done only for smaller guard members since with vertical displacement of guard members gravity should be taken into account. An advantage of a parallelogram construction in a vertical plane is that the guard member is kept in position against a vehicle due to gravity.

In these construction on or more arms that make the same movement in moving the guard members can be couples so as to increase the stability of the construction. This is especially important with large guard members, for instance a guard member with a length corresponding to the length of the vehicle.

According to a further embodiment the connecting means comprise at least one extendible member. By providing an extendible member in a simple embodiment a guard member can be moved in a straight line from a retracted position to an extended position. However, by providing a couple of extendable arms hinged to the frame structure and/or the guard member or by combining extendable arms with one or more non extendable arms hinged to the frame structure and/or the guard member the number of possible movements of a guard member increases. For instance, a guard member provided with extendible arms that are connected at a distance from each other to the support frame and guard member it is not necessary to align a vehicle precisely parallel to the fall arrest system since the guard member or the guard members can be extended over the required distance and positioned against the vehicle at the right angle. For such a system it is not required that all arms are extendable. However with at least three extendible arms for a guard member which extendable arms are hinged along a vertical axis to the frame structure and connected to the guard member such that the guard member can pivot along horizontal and vertical axis with respect to the extendable arms the guard member can be moved in any required position. This includes bringing the guard member in an inclined position, which dependent on the load of a vehicle or the shape of a vehicle could be convenient.

According to a further embodiment the frame structure comprises at least two posts spaced apart from each other. In principle any frame structure can be used for the support of the guard members, for instance a concrete wall, however, since such a structure should only support the guard members a lighter structure will do. Moreover, by using a number of vertical posts such as steel beams or tubes for the frame structure or as the main components for the frame structure it is easy to realize a structure that can be displaced. Therefore it is preferably provided that the posts of the frame structure are detachable installed. The posts can for instance be bolted to a concrete floor or holes can be provided into which the posts can be lowered. These holes and posts are shaped such that rotation of the posts is prevented.

Since the guard members are positioned closely around the vehicle, or more in particular the place where work has to be done on a vehicle, a fall is stopped almost immediately. Therefore it is not necessary that a guard member itself is designed to absorb the impact of a fall. According to a straightforward embodiment the guard member or guard members comprise a tubular frame or a lattice frame. In most cases this will do, however, according to the invention also a further embodiment is provided in which the guard member comprises a netting or mesh-like material. Such a netting or mesh-like material prevents that any of a persons extremities can stick through a guard member and also permits a light weight construction for a guard member.

According to the invention locking means are provided to lock a guard member in at least an extended position. To be able to guarantee that guard members will remain in the required position the guard members should be locked in that position. Such locking means can be provided in various embodiments from a simple pin and hole construction to pneumatic or hydraulic clamping means.

According to a further embodiment positioning means are provided to position a guard member between retracted and extended positions. Although, it is possible to provide a system in which the guard members are moved manually from the retracted position to the required position and back again, it is preferred to provide means to operate the guard members safely without the need to get between the frame structure and the vehicle. A simple embodiment consists of a lever system that is operated manually from the side of the frame structure turned away from the vehicle. Instead of manually operating the lever system, the lever system can also be operated pneumatically, hydraulically or electrically. Instead of separate positioning means such means can also be incorporated in extendible arms or form the extendible arms with which a guard member is connected to the frame structure.

According to still a further embodiment control means are provided to control the positioning means. Such control means preferably comprise detecting means to detect the precise location of a vehicle with respect to the fall arrest system, means to start the positioning means and means to stop the positioning means when the guard members are in the required position. To that end the control means are preferably provided with detecting and sensor means, such as infrared sensors, pressure sensors and the like.

The invention also provides a fall arrest system for use with a vehicle having a platform or a floor elevated from the ground such as to present a fall hazard, said fall arrest system comprising at least two fall arrest assemblies as described above, wherein two of the assemblies are arranged with the guard members of the respective assemblies opposite to each other and wherein the guard members of each assembly in extended positions define opposite guard surfaces. With this configuration guard members are provided at both sides of a vehicle, the guard member being positioned such that along the required length a continuous guard surface is provided.

A vehicle like a flatbed trailer has a free end for which also a fall arrest assembly could be provided, however, it would mean that a flatbed trailer would have to be reversed into position with respect of the fall arrest system. Preferably an elevated platform on wheels with a stairway is placed against the end of such a flatbed trailer to give easy access to the trailer and also to provide protection if a person would fall from that end of the vehicle.

According to a further embodiment the system is provided with guiding means for guiding a vehicle in position with respect to the fall arrest assemblies. With these means a vehicle can be aligned with respect of the fall arrest assemblies and at the same time prevent that a vehicle comes to near or even hits one of the assemblies.

According to a further embodiment these guiding means comprise beams or tubes fixed at a short distance above floor level such that a vehicle will touch these beam or tubes only with the tires of the vehicle.

With the guiding means it is possible to align a vehicle parallel or with a small deviation from the parallel position with respect to the fall arrest assembly or assemblies, as a consequence of which the guard members can always positioned close enough to the vehicle along the length of the vehicle without the need of having extendable arms to be able to correctly position the guard members.

An embodiment of the present invention will now be more particularly described, by way of example, with reference to the accompanying drawings, in which:
fig.1: shows the fall arrest system in perspective view with a trailer between opposite fall arrest assemblies;
fig.2: shows a vertical post of the frame structure with an arm hinged thereto in more detail;
fig.3: shows two vertical posts of the frame structure with a meshed guard member;
fi.4A: shows in top view a fall arrest assembly with the guard members in a retracted position, and
fig.4B: shows in top view a fall arrest assembly with the guard members in extended position.

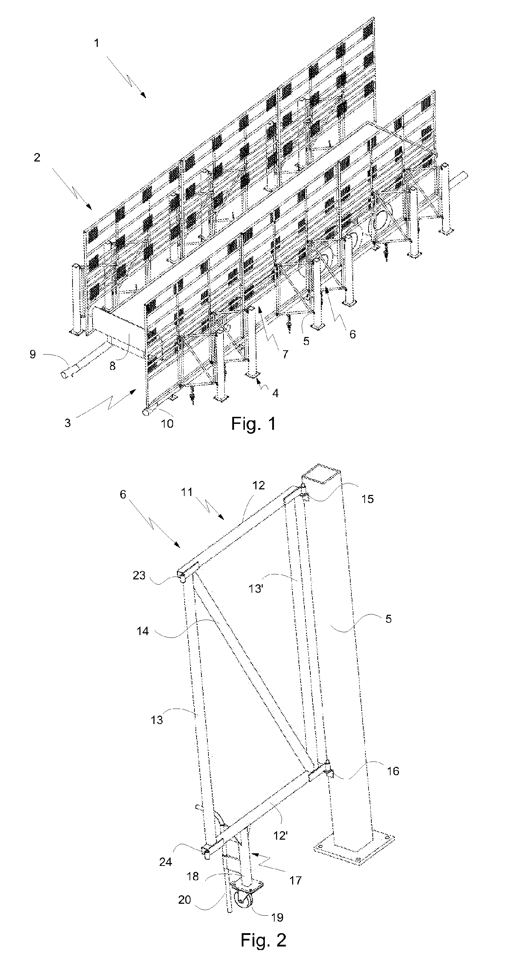

In fig.1 the fall arrest system 1 is shown in perspective view with two opposite fall arrest assemblies 2,3. Each fall arrest assembly 2, 3 has a frame structure 4 with a number of vertical posts 5, with arms 6 hinged to the vertical posts and with guard members 7 connected to the arms 6. A trailer 8 has been guided between the opposite fall arrest assemblies 2,3 with the aid of guiding rails 9,10, which in this embodiment guide truck and trailer 8 at the level of the tyres.

Fig.2 shows a vertical post 5 of frame structure 4 in more detail. The vertical post 5 is bolted to the floor which in most cases will be a concrete floor. The arm 6 is formed by a vertical frame 11 with parallel horizontal members 12, 12' and vertical members 13, 13' and a reinforcing member 14. The vertical frame 6 is hinged to the vertical post at upper and lower position 15, 16. With this construction a very stable and rigid arm 6 is obtained.

The stability of the arm 6 is further improved by support 17 with a support arm 18 and castor 19 at the lower end of support 17. The castor 19 can be a lockable castor with which it is possible to lock the arm 6 in any position. However, preferably other locking means are provided that give a more reliable locking mechanism. To that end a bolt 20 movable in vertical direction is provided which cooperates with holes (not shown) provided in the floor, such that the arm 6 can at least be locked safely in at least one extended position.

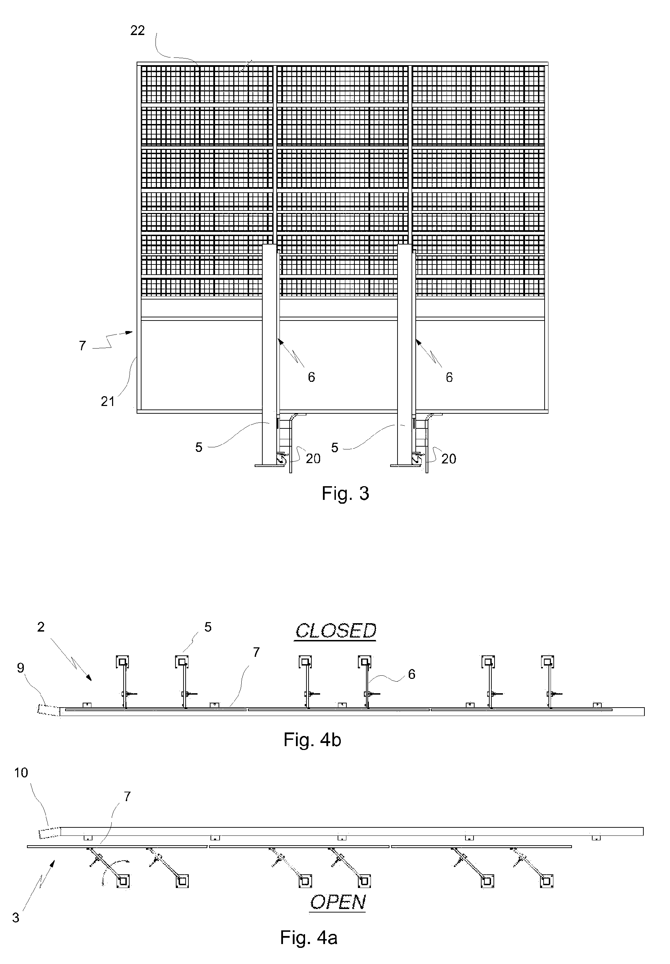

In fig.3 a section of a fall arrest assembly 2,3 is shown with two vertical posts 5 of frame structure 4, with their respective arms 6 and attached to these arms 6 a guard member 7. The guard member 7 has a tube frame 21 or a similar frame to which a mesh 22 is attached. The mesh 22 is preferably a metal mesh but could also be any other kind of mesh. The mesh 22 is only provided at the height of the frame were it is really necessary, that is from just below the level of the bed of the trailer 8 to the top of the guard member 7.

The guard member 7 is attached to arm 6 by means of hinges 23, 24 provided at the end of frame 11, see fig.2.

In the configuration as shown in figs. 1 and 3 the arms 6 of every two posts 5 are connected to a single guard member 7, the arms 6 forming a parallelogram construction. The respective arms 6 connect to the guard member at a location between a vertical centre line through the guard member and one of the respective vertical sides of the guard member. With this configuration the individual guard members 7 can be operated separately.

However, it is preferably provided that the successive guard members 7 of a fall arrest assembly 2, 3 are operated simultaneously to which end the vertical sides of successive guard members are connected. Such a connection is preferably such that the successive guard members have a certain freedom of movement relative to each other so as to compensate for differences in movement of the successive guard members 7. By providing such a connection between the guard members 7 it is prevented that the guard members partially overlap leaving a gap at the other side of the overlap.

In fig. 4A the fall arrest assembly 3 is shown with the guard members 7 in a retracted position in which the guard members 7 are at a distance from the guiding rail 10 such that the guard members will also be at a safe distance for a truck and trailer combination driving into the fall arrest system 1.

In fig. 4B the fall arrest assembly 2 is shown with the guard members 7 in an extended position in which the guard members 7 are above the guiding rail 9. The exact position of the guard members 7 in extended position in which the guard members 7 come to but against the sides of a trailer may vary dependent on the outside dimensions of the trailer. The extended position shown in fig. 4B is the maximal extended position possible wherein the arms 6 are perpendicular to the plane defined by the vertical posts 5.

## Claims

1. A fall arrest assembly for use with a vehicle having a platform or a floor elevated from the ground such as to present a fall hazard, said fall arrest assembly comprising a frame structure and at least one guard member, wherein connecting means are provided connecting the at least one guard member to the frame structure, the connecting means allowing to move the at least one guard member between retracted and extended positions.

2. Fall arrest assembly according to claim 1, wherein the connecting means comprise one or more arms hinged to at least the frame structure.

3. Fall arrest assembly according to claim 2, wherein two or more hinged arms are arranged in a parallelogram construction between frame structure and guard member.

4. Fall arrest assembly according to claim 3, wherein the parallelogram construction is in a horizontal plane.

5. Fall arrest assembly according to one or more of claims 1-4, wherein the connecting means comprise at least one extendible member.

6. Fall arrest assembly according to one or more of claims 1-5, wherein the frame structure comprises at least two posts spaced apart from each other.

7. Fall arrest assembly according to claim 6, wherein the posts of the frame structure are detachable installed.

8. Fall arrest assembly according to one or more of claims 1-7, wherein the guard member or guard members comprise a tubular frame or a lattice frame.

9. Fall arrest assembly according to claim 8, wherein the guard members comprise a netting or mesh-like material.

10. Fall arrest assembly according to one or more of claims 1-9, wherein locking means are provided to lock a guard member in at least an extended position.

11. Fall arrest assembly according to one or more of claims 1-10, wherein positioning means are provided to position a guard member between retracted and extended positions.

12. Fall arrest assembly according to claim 11, wherein the positioning means comprise pneumatic or hydraulic means.

13. Fall arrest assembly according to claim 11 or 12, wherein control means are provided to control the positioning means.

14. Fall arrest system for use with a vehicle having a platform or a floor elevated from the ground such as to present a fall hazard, said fall arrest system comprising at least two fall arrest assemblies according to one or more of claims 1-13, wherein two of the assemblies are arranged with the guard members of the respective assemblies opposite to each other and wherein the guard members of each assembly in extended positions define opposite guard surfaces.

15. Fall arrest system according to claim 14, wherein the system is provided with guiding means for guiding a vehicle in position with respect to the fall arrest assemblies.
